# FASCICULE DE BREVET EUROPEEN

(11) **EP 0 423 021 B1**
(45) Date de publication et mention de la délivrance du brevet: **16.06.1993**
(21) Numéro de dépôt: 90402810.7
(22) Date de dépôt: 09.10.1990
(51) Int. Cl.: F16B 37/04

(54) **Ecrou encagé perfectionné**
Käfigmutter
Caged nut

(30) Priorité: 12.10.1989 FR 8913354
(43) Date de publication de la demande: 17.04.1991
(73) Titulaire: RAPID S.A., F-75017 Paris (FR)
(72) Inventeur: Dubost, Dominique, F-78170 La Celle Saint Cloud (FR)
(74) Mandataire: Durand, Yves Armand Louis

(56) Documents cités:
- FR-A- 2 606 471
- US-A- 3 192 823

## Description

La présente invention a essentiellement pour objet un écrou encagé perfectionné.

On connaît déjà des écrous encagés comprenant notamment une cage présentant la forme générale d'un U et un écrou avec embase retenue entre le fond du U et une platine ou analogue elle-même retenue entre les branches du U de la cage (voir document FR-A-2 606 471).

Ces écrous encagés étaient généralement montés par clippage de la cage dans l'orifice d'un panneau ou analogue de façon à permettre la fixation par vissage sur ce panneau d'un autre panneau ou d'une pièce quelconque.

Toutefois, ces écrous encagés ne présentaient pas une résistance mécanique suffisante aux charges axiales élevées et aux couples de rotation importants, que l'on rencontre notamment dans la fixation des amortisseurs sur une caisse de véhicule automobile.

Aussi, la présente invention a pour but de pallier ces inconvénients en proposant un écrou encagé très résistant du genre ci-dessus et pouvant subir des charges axiales et des couples de rotation très élevés qui ne sont pas préjudiciables à l'écrou encagé lui-même ni à l'assemblage utilisant cet écrou encagé.

A cet effet, l'invention a pour objet un écrou encagé perfectionné du type comprenant une cage présentant la forme générale d'un U et un écrou avec embase retenue entre le fond du U et une platine ou analogue elle-même retenue entre les branches du U de la cage, caractérisé en ce que tant le fond du U que la platine comportent des languettes tombantes pour respectivement assurer le montage par clippage de l'écrou encagé sur un panneau ou analogue et permettre à cet écrou encagé de résister à des couples de rotation élevés.

Selon une autre caractéristique de l'invention, les languettes tombantes appartenant au fond du U de la cage comportent chacune au moins une patte découpée infléchie du côté de l'axe de l'écrou, en dessous du fond du U de la cage.

Selon encore une autre caractéristique de l'invention, la platine précitée comporte en son centre un orifice traversé par l'écrou proprement dit et dont la forme est telle qu'elle empêche la rotation de l'écrou par rapport à la platine.

Ainsi, l'orifice en question pourra présenter une forme polygonale dans laquelle s'inséreront les pans de l'écrou.

On précisera encore ici que les languettes tombantes appartenant à la platine s'étendent sensiblement parallèlement aux languettes tombantes appartenant au fond du U de la cage.

Suivant encore une autre caractéristique de l'écrou encagé de cette invention, les languettes tombantes appartenant à la cage et à la platine s'étendent suivant une direction orthogonale au fond du U de la cage et opposée à celle des branches du U de ladite cage.

Suivant un exemple de réalisation préféré, la platine et la cage comportent chacune deux languettes tombantes opposées.

Mais les caractéristiques et avantages de l'invention apparaîtront mieux dans la description détaillée qui suit et se réfère aux dessins annexés donnés uniquement à titre d'exemple et dans lesquels:

La figure 1 est une vue en perspective de la cage.

La figure 2 est une vue en perspective de la platine permettant la retenue de l'écrou dans la cage de la figure 1.

La figure 3 est une vue en plan et de dessus de l'écrou encagé monté par clippage sur un panneau ou analogue.

La figure 4 est une vue en élévation de l'écrou encagé en position montée et est constituée par une demi-vue en coupe axiale suivant la ligne IV-IV de la figure 3 et une demi-vue extérieure.

La figure 5 est une vue similaire à la figure 4, mais correspondant à la coupe V-V de cette figure 4.

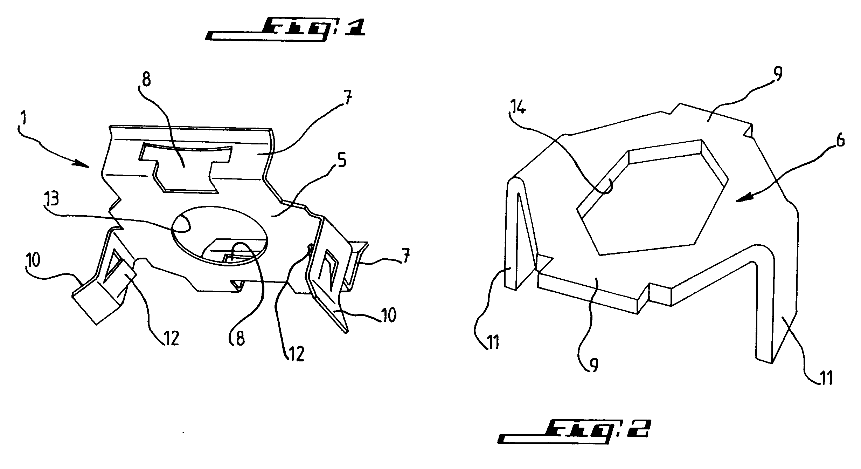

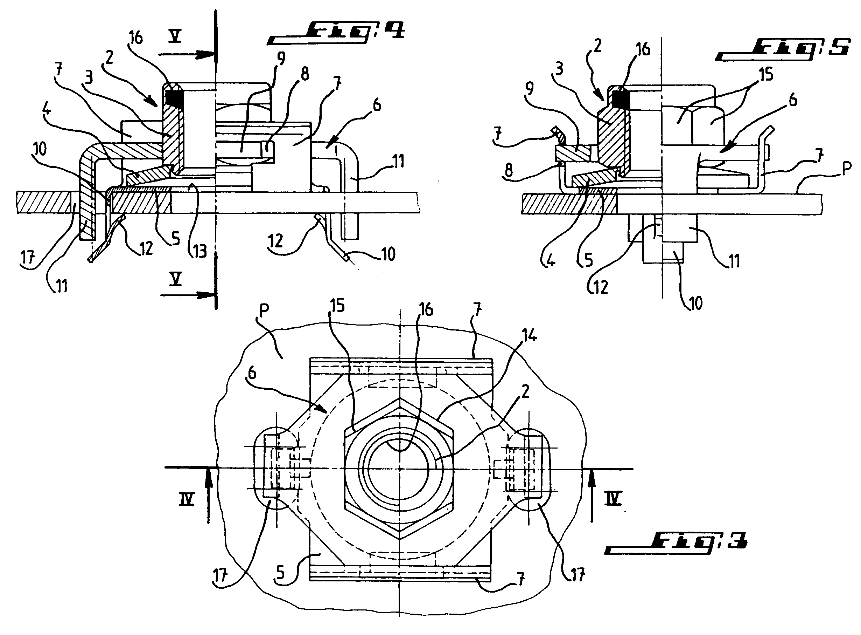

En se reportant aux figures, et suivant un exemple de réalisation, un écrou encagé conforme au principe de cette invention comprend essentiellement une cage 1 présentant la forme générale d'un U et un écrou 2 se composant d'un fût intérieurement fileté 3 solidaire, par sertissage, par exemple, d'une embase 4 qui, comme on le voit bien sur la figure 4, est maintenue prisonnière entre le fond 5 de la cage 1 et une platine ou analogue 6 que l'on voit bien sur la figure 2 et qui est elle-même retenue dans la cage 1.

Comme il apparaît clairement sur la figure 1, la cage 1 présente, en section transversale, la forme générale d'un U, dont la base constitue le fond 5 de la cage et dont les branches sensiblement parallèles sont repérées en 7.

Chacune des branches 7 comporte un évidement 8 pouvant recevoir des languettes opposées 9 faisant saillie de la platine 6, comme on le voit bien sur la figure 2, et s'étendant suivant le plan de cette platine, de sorte que, comme on le comprend, l'embase 4 de l'écrou 2 est prise en sandwich entre la platine 6 et le fond 5 du U de la cage 1.

Conformément à l'invention, le fond 5 de la cage 1 comprend une paire de languettes repliées tombantes et opposées 10, de même que la platine 6 comporte, elle-aussi, une paire de languettes repliées tombées et opposées 11.

Les languettes tombantes 10 appartenant au fond 5 du U de la cage 1 comportent chacune une patte découpée 12 qui, comme on le voit bien sur les figures 1 et 4 est infléchie, en dessous du fond 5 de la cage 1, vers l'axe de l'écrou 2.

Les languettes tombantes 11 appartenant à la platine 6 s'étendent, comme on le voit bien sur la figure 4, sensiblement parallèlement aux languettes tombées 10 appartenant au fond 5 de la cage 1.

On observera encore que les languettes tombantes 10 et 11 appartenant respectivement à la cage 1 et à la platine 6 s'étendent vers le bas suivant une direction orthogonale au fond 5 de la cage 1, et opposée à celle des branches 7 du U de la cage qui s'étendent vers le haut.

Suivant l'exemple de réalisation représenté sur les dessins, les languettes tombantes 10 de la cage 1 constituent deux languettes opposées, de part et d'autre des branches 7 du U de la cage, tandis que les languettes tombantes 11 de la platine 6 constituent elles aussi deux languettes opposées, de part et d'autres des languettes 9 insérables dans les évidements 8 des branches 7 de la cage 1.

Le fond 5 de la cage 1 comporte un orifice 13 permettant le passage d'un élément fileté vissé dans le fût taraudé 3 de l'écrou 2. Egalement, la platine 6 comporte un orifice 14 traversé par le fût taraudé 3 de l'écrou 2. Cet orifice présente, suivant l'exemple de réalisation représenté, une forme polygonale et s'adaptant à la périphérie avec pans 15 du fût taraudé 3 de l'écrou 2, de sorte que la rotation de l'écrou 2 par rapport à la platine 6 sera ainsi empêchée.

Le fût taraudé 3 de l'écrou 2 peut, comme connu en soi comporter une bague d'auto-freinage repérée en 16 sur les figures 3 à 5.

L'écrou encage qui vient d'être décrit peut être monté par clippage sur un panneau P comportant deux orifices 17.

Plus précisément, les languettes tombantes 10 et 11 sont engagées dans les orifices 17, et le montage par clippage de cet écrou encagé sur le panneau P est réalisé par le fait que les pattes 12 appartenant au fond 5 de la cage 1 s'accrochent sur le dessous de ce panneau P, comme on le voit bien sur la figure 4.

Ainsi, non seulement l'écrou encagé est fermement maintenu contre les deux faces du panneau P et peut ainsi subir des charges axiales élevées sans inconvénients, mais les couples de rotation importants que subira cet écrou encagé seront annihilés par les languettes tombantes 11 de la platine 6 pénétrant dans les ouvertures 17 du panneau P et se comportant comme un pêne bloqué dans une gâche.

Bien entendu l'invention n'est nullement limitée au mode de réalisation décrit et illustré qui n'a été donné qu'à titre d'exemple.

C'est ainsi que le nombre de languettes tombantes appartenant à la cage et à la platine pourrait être supérieur à deux, sans pour cela sortir du cadre de l'invention.

## Revendications

1. Ecrou encagé perfectionné du type comprenant une cage (1) présentant la forme générale d'un U et un écrou (2) avec embase (4) retenue entre le fond (5) du U et une platine ou analogue (6) elle-même retenue entre les branches (7) du U de la cage (1), caractérisé en ce que le fond (5) du U de la cage et la platine (6) comportent des languettes tombantes (10, 11) qui s'étendent sensiblement parallèlement les unes aux autres pour respectivement assurer le montage par clippage de l'écrou encagé sur un panneau ou analogue (P) et permettre à cet écrou encagé de résister à des couples de rotation élevés.

2. Ecrou encagé selon la revendication 1, caractérisé en ce que les languettes tombantes (10) appartenant au fond (5) du U de la cage (1) comportent chacune au moins une patte découpée (12) infléchie du côté de l'axe de l'écrou (2), en dessous du fond (5) du U.

3. Ecrou encagé selon la revendication 1 ou 2, caractérisé en ce que la platine précitée (6) comporte en son centre un orifice (14) traversé par l'écrou (2) et dont la forme est telle qu'elle empêche la rotation de l'écrou par rapport à la platine.

4. Ecrou encagé selon l'une des revendications 1 à 3, caractérisé en ce que les languettes tombantes (10, 11) appartenant à la cage (1) et à la platine (6) s'étendent suivant une direction orthogonale au fond (5) du U de la cage (1) et opposée à celle des branches (7) du U de cette cage.

5. Ecrou selon l'une des revendications 1 à 4, caractérisé en ce que la platine (6) et la cage (1) comportent chacune deux languettes tombantes opposées (10, 11).

## Patentansprüche

1. Vervollkommene Käfigmutter, derjenigen Gattung mit einem die allgemeine Gestalt eines U's aufweisenden Käfig (1) und einer Mutter (2) mit einem zwischen dem Boden (5) des U's und einer Platte oder dergleichen (6) zurückgehaltenen Fussstück (4), welche Platte selber zwischen den Schenkeln (7) des U's des Käfigs (1) zurückgehalten wird, dadurch gekennzeichnet, dass der Boden (5) des U's des Käfigs und die Platte (6) abfallende Zungen (10, 11) aufweisen, die sich etwa parallel zueinander erstrecken, um jeweils den Einbau durch Aufstecken der Käfigmutter an einer Tafel oder dergleichen (P) zu gewährleisten und dieser Käfigmutter zu gestatten, hohen Drehmomenten zu widerstehen.

2. Käfigmutter nach Anspruch 1, dadurch gekennzeichnet, dass die zu dem Boden (5) des U's des Käfigs (1) gehörenden abfallenden Zungen jeweils wenigstens eine zur Achse der Mutter (2) hin unterhalb des Bodens (5) des U's ausgeschnittene Knagge aufweisen.

3. Käfigmutter nach Anspruch 1 oder 2, dadurch gekennzeichnet, dass die vorgenannte Platte (6) in ihrer Mitte eine durch die Mutter (2) durchsetzte Oeffnung (14) aufweist, deren Gestalt derartig ist, dass sie das Verdrehen der Mutter in Bezug auf die Platte verhindert.

4. Käfigmutter nach einem der Ansprüche 1 bis 3, dadurch gekennzeichnet, dass die zu dem Käfig (1) und der Platte (6) gehörenden abfallenden Zungen (10, 11) sich in einer zum Boden (5) des U's des Käfigs (1) orthogonalen und derjenigen der Schenkel (7) des U's dieses Käfigs entgegengesetzten Richtung erstrecken.

5. Käfig nach einem der Ansprüche 1 bis 4, dadurch gekennzeichnet, dass die Platte (6) und der Käfig (1) jeweils zwei entgegengesetzte abfallende Zungen (10, 11) aufweisen.

## Claims

1. Improved caged nut of the type comprising a cage (1) exhibiting the general shape of a U and a nut (2) with a base part (4) retained between the bottom (5) of the U and a plate or the like (6) itself retained between the legs (7) of the U of the cage (1), characterized in that the bottom (5) of the U of the cage and the plate (6) comprise downwards depending tongues (10, 11) which extend in substantially parallel relation to each other for respectively ensuring the mounting through clipping of the caged nut upon a panel or the like (P) and allowing this caged nut to withstand high torques.

2. Caged nut according to claim 1, characterized in that the downwards depending tongues (10) belonging to the bottom (5) of the U of the cage (1) comprise each one at least one cut-out lug (12) deflected towards the axis of the nut (2) underneath the bottom (5) of the U.

3. Caged nut according to claim 1 or 2, characterized in that the aforesaid plate (6) comprises in its center an aperture (14) through which the nut (2) extends and the shape of which is such that it prevents the rotation of the nut with respect to the plate.

4. Caged nut according to one of claims 1 to 3, characterized in that the downwards depending tongues (10, 11) belonging to the cage (1) and to the plate (6) extend along a direction orthogonal to the bottom (5) of the U of the cage (1) and opposite to that of the legs (7) of the U of this cage.

5. Nut according to one of claims 1 to 4, characterized in that the plate (6) and the cage (1) comprise each one two opposite downwards depending tongues (10, 11).
